(19) Europäisches Patentamt
European Patent Office
Office européen des brevets

(11) **EP 4 567 058 A1**

(12) **EUROPEAN PATENT APPLICATION**
published in accordance with Art. 153(4) EPC

(43) Date of publication:
**11.06.2025 Bulletin 2025/24**

(21) Application number: **23849962.8**

(22) Date of filing: **25.07.2023**

(51) International Patent Classification (IPC):
*C08J 9/16* (2006.01)

(52) Cooperative Patent Classification (CPC):
**C08J 9/16**

(86) International application number:
**PCT/JP2023/027244**

(87) International publication number:
**WO 2024/029407 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.08.2022 JP 2022124987**

(71) Applicant: **JSP Corporation
Tokyo 100-0005 (JP)**

(72) Inventor: **SUENAGA, Katsuyuki
Yokkaichi-shi, Mie 510-0881 (JP)**

(74) Representative: **Gille Hrabal
Partnerschaftsgesellschaft mbB
Patentanwälte
Brucknerstraße 20
40593 Düsseldorf (DE)**

(54) **POLYAMIDE-BASED RESIN FOAM PARTICLE AND POLYAMIDE-BASED RESIN FOAM PARTICLE MOLDED ARTICLE**

(57) A polyamide-based resin expanded bead comprising a polyamide-based resin as a base resin, wherein the expanded bead comprises a carbon nanotube, and the expanded bead has a closed cell ratio of 70% or more.

[Fig. 1]

EP 4 567 058 A1

**Description**

TECHNICAL FIELD

The present invention relates to a polyamide-based resin expanded bead and a polyamide-based resin expanded beads molded article.

BACKGROUND ART

Polyamide-based resins are known as a plastic having high heat resistance, excellent in abrasion resistance and chemical resistance. An expanded molded article made by causing the polyamide-based resin to expand achieves weight saving while maintaining excellent heat resistance, abrasion resistance, chemical resistance, and the like, and as a result further application and development in automobile parts, electrical products, and the like is expected.

For example, PTL 1 discloses polyamide-based resin expanded beads and an expanded beads molded article obtained by in-mold molding of the expanded beads.

CITATION LIST

PATENT LITERATURE

PTL 1: WO 2020/050301

SUMMARY OF INVENTION

TECHNICAL PROBLEM

In the technique of obtaining an expanded beads molded article by in-mold molding of expanded beads as set forth in PTL 1, it is necessary to fill a mold with expanded beads and fuse the expanded beads with each other. Thus, the demand exists for polyamide-based resin expanded beads further having superior in-mold moldability.

Accordingly, a problem to be solved by the present invention is to provide a polyamide-based resin expanded bead that has superior in-mold moldability and that is capable of providing an excellent polyamide-based resin expanded beads molded article under a broad range of molding pressure conditions.

SOLUTION TO PROBLEM

As a result of intensive studies on the problem, the present inventors have discovered that the problem can be solved by a polyamide-based resin expanded bead containing a carbon nanotube and having a closed cell ratio within a specific range.

That is, the present invention relates to a polyamide-based resin expanded bead comprising a polyamide-based resin as a base resin wherein the expanded bead comprises a carbon nanotube and the expanded bead has a closed cell ratio of 70% or more, and a polyamide-based resin expanded beads molded article obtained by in-mold molding of the polyamide-based resin expanded bead.

ADVANTAGEOUS EFFECTS OF INVENTION

The present invention can provide a polyamide-based resin expanded bead that has superior in-mold moldability and that is capable of providing an excellent polyamide-based resin expanded beads molded article under a broad range of molding pressure conditions.

BRIEF DESCRIPTION OF DRAWING

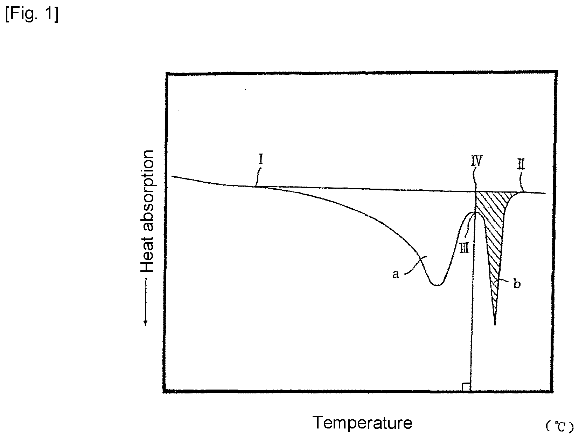

[Fig. 1] Fig. 1 is an example of a DSC curve obtained by heat-flux differential scanning calorimetry.

DESCRIPTION OF EMBODIMENTS

[Polyamide-based resin expanded bead]

The polyamide-based resin expanded bead of the present invention (hereinafter also simply referred to as "the expanded bead of the present invention" or "the expanded bead") is a polyamide-based resin expanded bead comprising a polyamide-based resin as a base resin, wherein the expanded bead comprises a carbon nanotube, and the expanded bead has a closed cell ratio of 70% or more.

(Polyamide-based resin)

The polyamide-based resin that serves as the base resin of the polyamide-based resin expanded bead of the present invention is, for example, a polyamide homopolymer or a polyamide copolymer, and is preferably a polyamide copolymer.

Examples of the polyamide homopolymer include a homopolymer such as a poly(6-aminohexanoic acid) that is also known as poly(caprolactam) (polycaproamide, nylon 6), a poly(laurolactam) (nylon 12), a poly(hexamethylene adipamide) (nylon 66), a poly(7-aminoheptanoic acid) (nylon 7), a poly(8-aminooctanoic acid) (nylon 8), a poly(9-aminononanoic acid) (nylon 9), a poly(10-aminodecanoic acid) (nylon 10), a poly(11-aminoundecanoic acid) (nylon 11), a poly(hexamethylene sebacamide) (nylon 610), a poly(decamethylene sebacamide) (nylon 1010),a poly(hexamethylene azelamide) (nylon 69), a poly(tetramethylene adipamide) (nylon 46), a poly(tetramethylene sebacamide) (nylon 410), a poly(pentamethylene adipamide) (nylon 56) and a poly(pentamethylene sebacamide) (nylon 510).

The polyamide copolymer refers to a copolymer having two or more repeating units, with at least a part of the repeating units each having an amide bond. Examples of the polyamide copolymer include a polycaproamide/polyhexamethylene adipamide copolymer (nylon 6/66), a caprolactam/hexamethylene diaminoadipic acid/lauryllactam copolymer (nylon 6/66/12), and a caprolactam/lauryllactam copolymer (nylon 6/12).

The polyamide-based resin to be used may be one, or two or more in combination, of these polyamide homopolymers and polyamide copolymers.

Among the above polyamide-based resins, preferred is a polyamide-based resin containing one or two or more selected from the group consisting of nylon 6, nylon 66, nylon 6/66, and nylon 6/66/12 as main components. More specifically, the proportion of the one or two or more selected from the group consisting of nylon 6, nylon 66, nylon 6/66, and nylon 6/66/12 in the polyamide-based resin is preferably 50% by mass or more, more preferably 60% by mass or more, still more preferably 80% by mass or more, and particularly preferably 90% by mass or more. In this case, an expanded bead having superior in-mold moldability is likely obtained, and also the resulting molded article has excellent physical properties.

Moreover, from the viewpoint of enabling the above effects to be more stably provided, the polyamide-based resin preferably contains one or two selected from the group consisting of nylon 6/66 and nylon 6/66/12 as main components. More specifically, the proportion of the one or two selected from the group consisting of nylon 6/66 and nylon 6/66/12 in the polyamide-based resin is preferably 50% by mass or more, more preferably 60% by mass or more, still more preferably 80% by mass or more, and particularly preferably 90% by mass or more.

The polyamide-based resin may be a polyamide or a polyamide copolymer incorporating a plant-derived ingredient.

Although the polyamide copolymer may be a block copolymer including a combination of a sequence of a certain quantity of the same repeating unit of amide and a sequence of a certain quantity of a different amide, or a random copolymer including different amides each randomly repeating, a random copolymer is preferred. When the polyamide copolymer is a random copolymer, an expanded bead is more easily molded at a relatively low molding pressure when performing in-mold molding on the expanded bead.

The polyamide-based resin used in the present invention has a flexural modulus of preferably 1000 MPa or more, more preferably 1200 MPa or more, and still more preferably 1500 MPa or more. A flexural modulus of the polyamide-based resin that is within the above range is preferred because, unlike amide-based elastomers having a flexural modulus of about 600 MPa or less, the polyamide-based resin after being expanded unlikely shrinks even when being exposed to normal temperature, and a highly expanded bead is likely obtained. The upper limit of the flexural modulus of the polyamide-based resin is about 3000 MPa.

The flexural modulus of the polyamide-based resin can be determined by preparing a resin test piece that is composed of the polyamide-based resin and that has predetermined dimensions, leaving the test piece to stand still for 72 hours at a temperature of 23°C and a relative humidity of 50%, and then measuring the flexural modulus at a test speed of 2 mm/min in accordance with JIS K7171: 2016.

From the viewpoint of obtaining a polyamide-based resin expanded bead having excellent heat resistance, the polyamide-based resin constituting the polyamide-based resin expanded bead has a melting point (Tm0) of preferably 175°C or more, more preferably 180°C or more, and still more preferably 185°C or more. On the other hand, from the viewpoint that temperature control is easy during the expansion of resin particles containing the polyamide-based resin as a base resin, and from the viewpoint that expanded beads having superior in-mold moldability are likely obtained in a stable manner, the polyamide-based resin has a melting point (Tm0) of preferably 230°C or less, more preferably 220°C or less, and still more preferably 200°C or less. From the above viewpoints, the melting point (Tm0) is preferably 175 to 230°C, more preferably 180 to 220°C, and still more preferably 185 to 200°C.

When the polyamide-based resin is one polyamide-based resin alone, the melting point of the polyamide-based resin is the melting point of that polyamide-based resin. When the polyamide-based resin is a mixture of two or more polyamide-based resins or is a mixture of a polyamide-based resin and another thermoplastic resin, the peak top temperature of the maximum melting peak of the mixture is regarded as the melting point of the polyamide-based resin.

In the present specification, the melting point (Tm0) of the resin is a value calculated as the peak top temperature of the melting peak of a DSC curve obtained at a heating rate of 10°C/min by heat-flux differential scanning calorimetry based on JIS K7121-1987 employing "when measuring the fusion temperature after performing a certain heat treatment" as the state adjustment of the test piece (the heating rate and the cooling rate in the state adjustment of the test piece are 10°C/min in each case). The test piece may be a polyamide-based resin or an expanded bead. The flow rate of nitrogen gas in the measurement environment is 30 mL/min.

When the DSC curve has a plurality of melting peaks, the peak top temperature of the melting peak having the largest area is employed as the fusion temperature. In the above measurement, the test piece to be used is a polyamide-based resin or an expanded bead that is, for example, stored by being placed in a desiccator and then exposed to a vacuum so as to avoid high temperature and high humidity conditions and so as not to become hydrolyzed.

The polyamide-based resin used in the present invention has a density of preferably 1.05 g/cm$^3$ or more, and more preferably 1.1 g/cm$^3$ or more. Also, the polyamide-based resin preferably has a density of 1.2 g/cm$^3$ or less. The measurement of the density is able to be performed based on the method described in ISO 1183-3.

It is preferable that the polyamide-based resin used in the present invention be an end-capped polyamide-based resin with a capped functional group at a molecular chain end. Thereby, hydrolysis of the expanded bead in a production step is more reliably suppressed, so that an expanded bead that is more preferred for in-mold molding is easily obtained. Further, the durability of an expanded beads molded article obtained by in-mold molding (hereinafter, also referred to simply as "molded article") is enhanced.

Examples of an end-capping agent for capping the above molecular chain end include a carbodiimide compound, an oxazoline compound, an isocyanate compound and an epoxy compound.

Among these, a carbodiimide compound is preferably used as an end-capping agent. Specific examples of the carbodiimide compound include an aromatic monocarbodiimide such as bis(dipropylphenyl)carbodiimide (e.g., "Stabaxol 1-LF" manufactured by Rhein Chemie Corporation), an aromatic polycarbodiimide (e.g., "Stabaxol P", "Stabaxol P100" and "Stabaxol P400" manufactured by Rhein Chemie Corporation), and an aliphatic polycarbodiimide such as poly(4,4'-dicyclohexylmethane carbodiimide) (e.g., "Carbodilite LA-1" manufactured by Nisshinbo Chemical Inc.). These end-capping agents may be used singly and in combinations of two or more thereof.

The amount of the end-capping agent compounded is preferably 0.1 to 5 parts by mass, and more preferably 0.5 to 3 parts by mass, relative to 100 parts by mass of the polyamide-based resin.

As described above, the polyamide-based resin for use in the present invention is preferably a polyamide-based resin with an end-capped with one or more end-capping agents selected from the group consisting of a carbodiimide compound, an epoxy compound, and an isocyanate compound, more preferably a polyamide-based resin that is end-capped with a carbodiimide compound.

(Carbon nanotube)

The polyamide-based resin expanded bead of the present invention contains a carbon nanotube. More preferably, a carbon nanotube is contained in the polyamide-based resin constituting the polyamide-based resin expanded bead.

While the carbon nanotube contained in the polyamide-based resin expanded bead of the present invention is not particularly limited as long as the effect of the present invention is provided, the following carbon nanotube is preferred.

The carbon nanotube has an average diameter of preferably 5 to 25 nm, and more preferably 10 to 20 nm.

The carbon nanotube has an average length of preferably 0.2 to 50 $\mu$m, more preferably 0.5 to 50 $\mu$m, and still more preferably 2 to 40 $\mu$m.

The carbon nanotube preferably has an aspect ratio of preferably 20 to 1000, and more preferably 100 to 1000. The aspect ratio can be determined by dividing the average length of the carbon nanotube by the average diameter.

The average diameter and the average length of the carbon nanotube can be measured, for example, in the following manner. First, a surface image of an expanded bead is obtained with a transmission electron microscope. Fifty or more carbon nanotubes present in this surface image are randomly selected and their diameters are measured. Then, the average of the resulting diameters can be regarded as the average diameter of carbon nanotubes.

Similarly, the lengths of the fifty or more carbon nanotubes randomly selected in the surface image are each measured. When the carbon nanotubes do not have a straight shape but a curved shape or the like, the length along the shape of the carbon nanotubes is measured with a curvimeter or the like. The average of the lengths thus obtained can be regarded as the average length of the carbon nanotubes.

The carbon nanotube may be a multi-walled carbon nanotube.

The carbon nanotube content in the polyamide-based resin expanded bead of the present invention is preferably 0.1 to 10 parts by mass based on 100 parts by mass of the base resin. The carbon nanotube content in the polyamide-based resin expanded bead of the present invention is more preferably 0.3 parts by mass or more, still more preferably 0.6 parts by mass or more, and further preferably 0.8 parts by mass or more, and is more preferably 5 parts by mass or less, still more preferably 3 parts by mass or less, and further preferably 2 parts by mass or less, based on 100 parts by mass of the base resin. When the carbon nanotube content is within the above range, an excellent polyamide-based resin expanded beads molded article is obtained under a broad range of molding pressure conditions.

When producing the polyamide-based resin expanded bead of the present invention, a masterbatch containing a carbon nanotube is preferably used. The base resin of the masterbatch may be, for example, a thermoplastic resin. The thermoplastic resin in this case may be the above polyamide-based resin or a resin different from the above polyamide-based resin, and is preferably a thermoplastic resin containing a polyamide-based resin and/or a polyolefin-based resin as a main component, and more preferably a thermoplastic resin containing a polyamide-based resin and/or a polypropylene-based resin as a main component.

A commercially available carbon nanotube can also be used as the above carbon nanotube, which may be purchased from, for example, Nanocyl SA.

Herein, while the reasons as to why the polyamide-based resin expanded bead of the present invention has superior in-mold moldability and why an excellent polyamide-based resin expanded beads molded article can be obtained under a broad range of molding pressure conditions are not clear, possible reasons may be as follows. When performing in-mold molding on the polyamide-based resin expanded bead, the crystalline components of the polyamide-based resin need to be sufficiently melted by, for example, heating and pressurization by steam. On the other hand, after in-mold molding using steam, crystallization of the resin progresses as the temperature and the pressure inside the mold decrease, and thus sink marks (deformation resulting in a reduced volume) are likely created on a molded article. It seems that, in this case, a reduction in the volume of the molded article at this time is suppressed due to the carbon nanotube contained in the expanded bead, and thus the molded article, the molding shrinkage of which is suppressed to a small level, is likely obtained. It seems that, accordingly, the range of steam pressure conditions capable of providing a molded article, in which production of sink marks is suppressed, is increased, and an excellent polyamide-based resin expanded beads molded article can be obtained in a broad range of molding pressures.

(Coloring agent)

The expanded bead of the present invention may contain a coloring agent to improve the appearance of the resulting molded article and to enhance designability. When producing a black-based molded body, a colored molded body can be obtained solely using the above carbon nanotube, while a coloring agent may be contained to further enhance coloration or adjust the hue.

The coloring agent may be an inorganic or organic pigment or dye.

Examples of the inorganic pigment include titanium oxide, carbon black, titanium yellow, iron oxide, ultramarine blue, cobalt blue, a calcination pigment, a metallic pigment, mica, a pearl pigment, zinc white, precipitated silica, and cadmium red.

Examples of the organic pigment include a monoazo-based pigment, a condensed azo-based pigment, an anthraquinone-based pigment, an isoindolinone-based pigment, a perinone-based pigment, a quinacridone-based pigment, a perylene-based pigment, a thioindigo-based pigment, a dioxazine-based pigment, a phthalocyanine-based pigment, a nitroso-based pigment, and an organic fluorescent pigment.

Examples of the dye include an anthraquinone-based dye, a perinone-based dye, a basic dye, an acidic dye, and a mordant dye.

Among these coloring agents, an organic pigment or an inorganic pigment is preferably used from the viewpoint of weather resistance. An inorganic pigment is preferred from the viewpoint of heat resistance and weather resistance.

The pigment content in the expanded bead is preferably 0.5 to 10% by mass, more preferably 0.8 to 5% by mass, and still more preferably 1 to 3% by mass.

In particular, when carbon black is used as a pigment, the carbon black content in the expanded bead is preferably 0.5 to 10% by mass, more preferably 0.8 to 5% by mass, and still more preferably 1 to 3% by mass. When the pigment content is within the above range, excellent designability can be imparted to the resulting expanded beads molded article.

(Other resins and additives)

The polyamide-based resin expanded bead of the present invention contains a polyamide-based resin as a base resin. Herein, the expression "contains a polyamide-based resin as a base resin" means that the polyamide-based resin expanded bead is composed of a resin containing a polyamide-based resin as a main component.

The polyamide-based resin expanded bead of the present invention may contain a further resin other than the above polyamide-based resin as long as the effects of the present invention are not impaired. In this case, the content of the resin other than the polyamide-based resin in the polyamide-based resin expanded bead is preferably 40 parts by mass or less, more preferably 30 parts by mass or less, still more preferably 20 parts by mass or less, further preferably 10 parts by mass or less, and particularly preferably 5 parts by mass or less, based on 100 parts by mass of the polyamide-based resin.

Examples of the further resin include a polyethylene-based resin, a polypropylene-based resin, a polystyrene-based resin, a vinyl acetate resin, a thermoplastic polyester resin, an acrylic acid ester resin, a methacrylic acid ester resin, a modified polyphenylene ether resin, a polycarbonate resin, a polyacetal resin, a polybutylene terephthalate resin, a polysulfone resin, a polyethersulfone resin, a polyamideimide resin, a polyetherimide resin, and a polyetheretherketone resin.

Typically used various additives such as an antistatic agent, a conductivity imparting agent, a lubricant, a UV absorber, a flame retardant, a metal deactivator, a crystal nucleating agent, and a filler may be suitably added to the expanded bead of the present invention as necessary. The amount of these various additives added, although it varies depending on the intended use of the molded article, is preferably 25 parts by mass or less, more preferably 15 parts by mass or less, still more preferably 10 parts by mass or less, and further preferably 5 parts by mass or less, based on 100 parts by mass of the base resin.

(Properties of polyamide-based resin expanded bead)

The polyamide-based resin expanded bead of the present invention has a closed cell ratio of 70% or more. The polyamide-based resin expanded bead of the present invention has a closed cell ratio of preferably 75% or more, more preferably 80% or more, still more preferably 85% or more, and further preferably 90% or more. When the polyamide-based resin expanded bead has a closed cell ratio satisfying the above range, an expanded bead having a low apparent density is easily obtained. Also, the expanded bead having a closed cell ratio that satisfies the above range has superior in-mold moldability, and a molded article having excellent fusion bonding properties and recoverability is likely obtained. The closed cell ratio is a ratio of the volume of closed cells to the volume of the whole cells in an expanded bead, which may be determined using an air pycnometer based on ASTM-D2856-70.

The expanded bead of the present invention has an apparent density of preferably 50 kg/m$^3$ or more and 500 kg/m$^3$ or less. The apparent density of the expanded bead of the present invention is more preferably 70 kg/m$^3$ or more and still more preferably 100 kg/m$^3$ or more, and is more preferably 300 kg/m$^3$ or less and still more preferably 200 kg/m$^3$ or less.

An apparent density of the expanded bead within the above range results in excellent in-mold moldability, and an excellent expanded beads molded article is likely obtained. The apparent density of the expanded bead is measured by the following method.

A measuring cylinder containing water at 23°C is prepared, and the mass W1 [g] of expanded beads that have a bulk volume of about 500 cm$^3$ and that have been left to stand for 2 days at a relative humidity of 50%, 23°C, and 1 atm is measured. Next, the expanded beads are submerged in the water in the measuring cylinder using a wire mesh. In consideration of the volume of the wire mesh, the volume V1 [cm$^3$] of the expanded beads is measured based on the increased water level, and the apparent density of the expanded beads is determined by dividing the mass W1 [g] of the expanded beads by the volume V1 (W1/V1) and converting the unit into [kg/m$^3$].

The expanded bead of the present invention has an average cell diameter of preferably 20 $\mu$m or more and 200 $\mu$m or less. The average cell diameter of the expanded bead of the present invention is more preferably 30 $\mu$m or more and still more preferably 40 $\mu$m or more, and is more preferably 150 $\mu$m or less and still more preferably 100 $\mu$m or less. An average cell diameter of the expanded bead within the above range results in excellent in-mold moldability, and the molded article obtained using the expanded bead has an excellent appearance.

The outermost cell diameter, which is the diameter of a cell located on the outermost surface side of the expanded bead, is preferably 30 to 150 $\mu$m and more preferably 50 to 130 $\mu$m. The ratio of the outermost cell diameter to the average cell diameter is preferably 0.5 to 1.5 and, from the viewpoint of enhancing in-mold moldability, is preferably 0.7 to 1.3.

The average cell diameter of the polyamide-based resin expanded bead is measured as follows. First, the expanded bead is split into about two through the center of the expanded bead, and the cross section thereof is photographed with a scanning electron microscope. Next, on the cross-sectional photograph, straight lines are drawn in 8 directions at equal intervals from near the center of the cross-section of the expanded bead, and the number of all cells intersecting the lines is counted. A value obtained by dividing the total length of the lines by the total number of cells counted is defined as the cell diameter of the expanded bead. The procedure is performed in the same manner for 10 or more expanded beads, and the arithmetic mean of the cell diameters of the respective expanded beads is defined as the average cell diameter of the expanded beads.

The outermost cell diameter of the polyamide-based resin expanded bead is measured as follows. In the cross-sectional photograph used in the measurement of the average cell diameter, the maximum length of cells located on the outermost surface side of the expanded bead is calculated by drawing a straight line from the surface of the expanded bead toward the center of the expanded bead. The above measurement is performed in the same manner for each cross-sectional photograph (10 or more expanded beads), and the arithmetic mean thereof is defined as the outermost cell diameter of the expanded bead.

The polyamide-based resin expanded bead of the present invention preferably has a crystal structure that shows a melting peak (an intrinsic peak) intrinsic to a polyamide-based resin and a melting peak (a high temperature peak) having a peak top temperature on the higher temperature side than the peak top temperature of the intrinsic peak is in a DSC curve obtained under the following condition 1.

(Condition 1)

The DSC curve is measured by heat-flux differential scanning calorimetry in accordance with JIS K7121-1987 by using the polyamide-based resin expanded bead as a test piece and heating and melting the test piece from 30°C to a temperature 30°C higher than a temperature attained at the end of a melting peak at a heating rate of 10°C/min.

A more detailed description will now be provided below.

The DSC curve means a DSC curve obtained by heating an expanded bead by the above measurement method (a DSC curve in the first heating). The melting peak (the intrinsic peak) intrinsic to the polyamide-based resin is a melting peak appearing due to the melting of crystals that the polyamide-based resin constituting the expanded bead typically has.

On the other hand, the melting peak (the high temperature peak), which has a peak top temperature on the higher temperature side than the intrinsic peak is, is a melting peak appearing on the higher temperature side than the intrinsic peak is in the DSC curve in the first heating. When this high temperature peak appears, secondary crystals are presumably present in the resin. Note that only a melting peak resulting from the melting of crystals that the polyamide-based resin constituting the expanded bead typically has appears in a DSC curve (a DSC curve in the second heating) obtained by heating the expanded bead from 30°C to a temperature 30°C higher than a temperature attained at the end of a melting peak at a heating rate of 10°C/min (the first heating), then cooling it from a temperature 30°C higher than a temperature attained at the end of a melting peak to 23°C at a cooling rate of 10°C/min, and heating it again from 23°C to a temperature 30°C higher than a temperature attained at the end of a melting peak at a heating rate of 10°C/min (the second heating). This intrinsic peak appears in the DSC curve in the first heating as well as the DSC curve in the second heating, and the peak top temperature may be slightly different between the first and second heatings, but the difference is usually within about 5°C. Which peak is an intrinsic peak can be verified accordingly.

The heat of fusion at the high temperature peak of the polyamide-based resin expanded bead of the present invention is preferably 0.1 J/g or more and 20 J/g or less. By containing a carbon nanotube, the polyamide-based resin expanded bead of the present invention can be an expanded bead that is capable of in-mold molding and that has a broad range of molding pressures even when the heat of fusion at the high temperature peak is small or when the expanded bead has a crystal structure from which no high temperature peak appears. When the heat of fusion at the high temperature peak of the expanded bead is within the above range, in-mold moldability is further improved. The heat of fusion at the high temperature peak of the polyamide-based resin expanded bead of the present invention is more preferably 1 J/g or more, still more preferably 3 J/g or more, and further preferably 5 J/g or more, and is more preferably 10 J/g or less and still more preferably 7 J/g or less.

The heat of fusion at the high temperature peak can be determined by heat-flux differential scanning calorimetry in accordance with JIS K7121-1987 using the polyamide-based resin expanded bead as a test piece. Specifically, the heat of fusion can be determined from a DSC curve obtained by heating the test piece from 30°C to a temperature 30°C higher than a temperature attained at the end of a melting peak at a heating rate of 10°C/min (a DSC curve in the first heating). More specifically, the heat of fusion can be measured by the method described in the Examples.

<Method for producing polyamide-based resin expanded bead>

The polyamide-based resin expanded bead of the present invention may be obtained by any method, and is preferably produced by expanding a resin particle that contains the polyamide-based resin as a base resin and that contains a carbon nanotube. Example of the method for producing the expanded bead of the present invention includes an extrusion expansion method, a gas impregnation pre-expansion method, a dispersion medium discharge expansion method, or other expansion methods based on such methods and the principles of such methods. A more preferred method for producing the polyamide-based expanded resin bead is a production method involving expanding a resin particle obtained by kneading a polyamide-based resin with a masterbatch containing a carbon nanotube, and more preferably the method has the step of kneading a polyamide-based resin with a masterbatch containing a carbon nanotube and granulating the mixture to give a resin particle, and the step of expanding the resin particle. A detailed description will now be provided below.

(Resin particle containing polyamide-based resin as base resin, and production method)

The mass of one resin particle is suitably set according to the size, apparent density, and the like of the intended expanded bead, and is preferably 0.5 to 15.0 mg. With a mass in the above range, the apparent density can be improved. From this viewpoint, the lower limit of the mass of the resin particle is more preferably 1.0 mg, and still more preferably is 1.5 mg. On the other hand, the upper limit is more preferably 10.0 mg, still more preferably 7.0 mg, and further preferably 5.0 mg.

The method for producing the resin particle is not particularly limited, and the resin particle can be obtained by a known method. For example, the resin particle can be obtained by kneading a polyamide-based resin and a carbon nanotube and granulating the mixture, and is preferably obtained by kneading a polyamide-based resin and a masterbatch containing a carbon nanotube and granulating the mixture. Specifically, the resin particle can be obtained by introducing a polyamide-based resin, a carbon nanotube or a masterbatch containing a carbon nanotube, and optionally an additive such as a cell controlling agent into an extruder, kneading the mixture to give a molten kneaded product, and cutting the molten kneaded product to have a predetermined mass.

Examples of the method for cutting the molten product to have a predetermined mass include a strand cutting method having the steps of extruding the molten kneaded product in a strand form from a small hole of a die attached to the tip of the extruder and cutting the extruded molten kneaded product to have a predetermined mass by a pelletizer, a hot cutting method having the steps of extruding the molten kneaded product into a gas phase and immediately cut the molten kneaded product, and an underwater cutting method (UWC method) having the steps of extruding the molten kneaded product into water and immediately cutting the molten kneaded product.

As described above, when producing the polyamide-based resin particle, preferably a masterbatch is prepared in which a carbon nanotube is dispersed in a thermoplastic resin in advance, and then a polyamide-based resin, the masterbatch, and optionally added additives are supplied to an extruder. Formulating the carbon nanotube into a masterbatch form facilitates uniform dispersion of the carbon nanotube in the polyamide-based resin particle.

The proportion of the carbon nanotube contained in the masterbatch is preferably 1 to 40% by mass, more preferably 5 to 30% by mass, and still more preferably 10 to 20% by mass. From the viewpoint of facilitating dispersion of the carbon nanotube in the polyamide-based resin, the thermoplastic resin used as the base resin of the masterbatch preferably contains a polyamide-based resin and/or a polyolefin-based resin as a main component, and more preferably contains a polyamide-based resin and/or a polypropylene-based resin as a main component. More specifically, the proportion of the polyamide-based resin and/or polyolefin-based resin in the thermoplastic resin is preferably 50% by mass or more, more preferably 60% by mass or more, still more preferably 80% by mass or more, and particularly preferably 90% by mass or more.

(Examples of method for producing polyamide-based resin expanded bead)

Examples of the method for producing the polyamide-based resin expanded bead of the present invention include production methods that have the "impregnating step" of impregnating a resin particle containing the polyamide-based resin as a base resin with a blowing agent, and the "expanding (foaming) step" of expanding (foaming) the resin particle that is impregnated with the blowing agent and contains the polyamide-based resin as a base resin by heating, pressure change, volume change, or the like.

(Blowing agent)

In the method for producing the expanded bead of the present invention, a physical blowing agent is preferably used as a blowing agent. Examples of the physical blowing agent include an organic physical blowing agent such as an aliphatic hydrocarbon such as propane, butane, pentane, hexane and heptane, an alicyclic hydrocarbon such as cyclopentane and cyclohexane, a halogenated hydrocarbon such as chlorofluoromethane, trifluoromethane, 1,1-difluoroethane, 1,1,1,2-tetrafluoroethane, methyl chloride, ethyl chloride, methylene chloride, and a dialkyl ether such as dimethyl ether, diethyl ether and methyl ethyl ether. Examples of the inorganic physical blowing agent include carbon dioxide, nitrogen, helium, argon and air.

From the viewpoints of less impact on the environment and excellence in safety due to inflammability, among the physical blowing agents, an inorganic physical blowing agent is preferred. Carbon dioxide or nitrogen is more preferred and carbon dioxide is still more preferred.

(Examples of production method)

While the method for producing the expanded bead of the present invention is not limited as long as the method has the "impregnating step" and "expanding step" described above, preferred is [1] a method in which a resin particle is impregnated with a blowing agent, then the resin particle impregnated with the blowing agent is taken out without being expanded, and then the resin particle is heated in an expanding apparatus to obtain an expanded bead, or [2] a method in which a resin particle dispersed in a dispersion medium in a pressure vessel is impregnated with a blowing agent, and then the resin particle is discharged together with the dispersion medium to an atmosphere having a pressure lower than the pressure inside the pressure vessel to obtain an expanded bead. The method [2] is more preferred.

The method [2], which is the more preferred production method, will now be described below.

The production method for producing the polyamide-based resin expanded bead of the present invention preferably has the following steps:

(1) the dispersing step of obtaining a dispersion by dispersing the resin particle containing a polyamide-based resin as a base resin in water in a pressure vessel;
(2) the impregnating step of impregnating the resin particle in the dispersion with a physical blowing agent;
(3) the retaining step of retaining the dispersion at a temperature equal to or higher than 90°C lower than the melting point (Tm) of the resin particle (Tm - 90°C) and less than 50°C lower than Tm (Tm - 50°C) for a retention time of 1 minute or more and 60 minutes or less; and
(4) the expanding step of controlling a temperature (Te) of the dispersion immediately before expansion to a temperature equal to or higher than 90°C lower than the melting point (Tm) of the resin particle (Tm - 90°C) and less than 50°C lower than Tm (Tm - 50°C) and then discharging the dispersion from the pressure vessel to an atmosphere having a pressure lower than the pressure inside the pressure vessel to expand the resin particle.

The production method for producing the expanded bead of the present invention may have a step other than the steps described above, and may include other components in the steps described above. The impregnating step and the retaining step may be performed simultaneously, or the retaining step may be performed before the impregnating step.

[Dispersing step]

The dispersing step is a step of obtaining a dispersion by dispersing the resin particle in water in a pressure vessel.

The method for dispersing the resin particle in water is not particularly limited and a known method may be used. For example, while stirring water with a stirrer, resin particles are added, and a dispersion is able to be obtained by further stirring.

On an as needed basis, it is preferable that a dispersant such as inorganic material such as aluminum oxide, tricalcium phosphate, magnesium pyrophosphate, zinc oxide, kaolin, mica, talc and smectite, and a dispersion aid such as anionic surfactant such as sodium dodecylbenzene sulfonate and sodium alkane sulfonate be added to the dispersion. The mass ratio between the resin particles and the dispersant (resin particle/dispersant) is preferably 20 to 2000, and more preferably 30 to 1000. The mass ratio between the dispersant and the dispersion aid (dispersant/dispersion aid) is preferably 1 to 500, and more preferably 1 to 100.

[Impregnating step]

The impregnating step is a step of impregnating the resin particle in the dispersion with a blowing agent. At the same time, the resin particle may be caused to absorb water. Although the method for impregnating the resin particles with a blowing agent is not particularly limited, it is preferable that the resin particles be dispersed in water in a pressurizable pressure vessel such as autoclave so as to be impregnated with the blowing agent. From the viewpoint of sufficiently impregnating the resin particle with the blowing agent in a short time, preferably the impregnation of the resin particles with the blowing agent is performed while heating, in addition to pressurizing, the pressure vessel.

The impregnating step includes, in the case of pressurizing, a step of the pressure in the pressure vessel reaching the pressure at the time of impregnation (hereinafter, also referred to as impregnation pressure) from atmospheric pressure.

Further, the step of impregnating the resin particle with a blowing agent includes the step of heating the dispersion in which the resin particle is dispersed in water from ordinary temperature to the temperature used at the time of impregnation (hereinafter, also referred to as an impregnation temperature).

From the viewpoint of sufficiently impregnating the resin particles with the blowing agent in a short time, the temperature during impregnation by heating is preferably 50°C or more, more preferably 80°C or more, and preferably the melting point (Tm (°C)) of the resin particle or less, more preferably (Tm - 20 (°C)) or less. That is, the impregnation temperature is preferably 50 to Tm°C, and more preferably 80 to (Tm - 20)°C.

From the viewpoint of sufficiently impregnating the resin particles with the blowing agent in a short time, it is preferable that the pressure during impregnation under pressurized conditions (hereinafter also referred to as impregnation pressure) be controlled such that the pressure in the pressure vessel after addition of blowing agent to the vessel containing the dispersion is preferably 1.5 MPa (G) or more, more preferably 2.5 MPa (G) or more, and preferably 7 MPa (G) or less, more preferably 5 MPa (G) or less. That is, the impregnation pressure is preferably 1.5 to 7 MPa (G), and more preferably 2.5 to 5 MPa (G).

Herein, the pressure provided with (G) is a gauge pressure, i.e., a pressure value based on the atmospheric pressure.

The dispersing step and the impregnating step also have the role of causing the resin particle to absorb water. From the viewpoint of plasticizing the resin bead by allowing it to sufficiently absorb water, a total time of the step of obtaining the dispersion and the step of impregnating with a blowing agent is preferably 20 minutes or more, and more preferably 30 minutes or more. On the other hand, from the viewpoint of the productivity of the expanded beads, the total time is preferably 60 minutes or less.

Further, from the viewpoint of plasticizing the resin particle by being caused to sufficiently absorb water, the temperature rising rate in the impregnating step is preferably 10°C/min or less, and more preferably 7°C/min or less. On the other hand, from the viewpoint of the productivity of the expanded beads, the temperature rising rate is preferably 1 °C/min or more, and more preferably 2 °C/min or more. From the above viewpoints, the temperature rising rate in the impregnating step is preferably 1 to 10°C/min, and more preferably 2 to 7°C/min.

[Retaining step]

The retaining step is preferably a step of retaining the dispersion at a temperature equal to or higher than 90°C lower than the melting point (Tm) of the resin particle (Tm - 90°C) and less than 50°C lower than Tm (Tm - 50°C) for a retention time of 1 minute or more and 60 minutes or less.

From the viewpoint of plasticizing the polyamide-based resin by allowing it to sufficiently absorb water, and from the viewpoint of allowing the polyamide-based resin to be uniformly impregnated with the blowing agent, the retention temperature of the dispersion in the retaining step is preferably equal to or higher than a temperature 90°C lower than the melting point (Tm) of the resin particle (Tm - 90°C), more preferably equal to or higher than a temperature 80°C lower than Tm (Tm - 80°C), still more preferably equal to or higher than a temperature 70°C lower than Tm (Tm - 70°C), and further preferably equal to or higher than a temperature 65°C lower than Tm (Tm - 65°C), and is preferably lower than a temperature 50°C lower than Tm (Tm - 50°C), more preferably equal to or lower than a temperature 55°C lower than Tm (Tm - 55°C), still more preferably equal to or lower than a temperature 57°C lower than Tm (Tm - 57°C), and further preferably equal to or lower than a temperature 59°C lower than Tm (Tm - 59°C).

Normally, when producing an expanded bead using a general-purpose resin such as a polypropylene resin as a base resin, the raw material resin is retained near its melting point. However, in the method for producing the polyamide-based resin expanded bead of the present invention, the polyamide-based resin expanded bead is preferably produced by being retained at a temperature equal to or higher than 90°C lower than the melting point (Tm) of the resin particle (Tm - 90°C) and less than 50°C lower than Tm (Tm - 50°C). This is because the polyamide-based resin is hygroscopic, so the resin particle can be plasticized by water used as a dispersion medium, and the melting point thereof can be significantly lowered. As a result, the resin particle can be expanded at a significantly lower temperature than the actual melting point of the resin particle, and an expanded bead having a desired apparent density and closed cell ratio can be stably produced.

From the viewpoint of allowing the polyamide-based resin to be uniformly impregnated with the blowing agent to obtain expanded beads having a high closed cell ratio, the retention time in the retaining step is preferably 1 minute or more, more preferably 5 minutes or more, still more preferably 10 minutes or more, and further preferably 13 minutes or more. Further, from the viewpoint of the productivity of the expanded beads, and the viewpoint of preventing hydrolysis of the polyamide-base resin, the retention time in the retaining step is preferably 60 minutes or less, more preferably 40 minutes or less, still more preferably 30 minutes or less, further preferably 20 minutes or less, and further more preferably 18 minutes or less. From the above viewpoints, the retention time in the retaining step is preferably 1 to 60 minutes, more preferably 5 to 40 minutes, still more preferably 10 to 30 minutes, and further preferably 13 to 18 minutes. When the retention time is as described above, a polyamide-based resin expanded bead having a low apparent density and a high closed cell ratio can be obtained. The retaining step may be performed by setting multiple steps in the above-described temperature range, or the temperature may be slowly increased over a sufficient time in the above-described temperature range. From the viewpoint of easier production, it is preferable to set a one-step process in the above-described temperature range (constant retention temperature) and retain for the time described above.

From the viewpoint of allowing the polyamide-based resin to be uniformly impregnated with the blowing agent, it is preferable that the retaining step be performed under pressurized conditions, and a same pressure as the impregnation pressure be retained. The pressure in the vessel containing the dispersion is controlled to preferably 1.5 MPa (G) or more, more preferably 2.5 MPa (G) or more. Also, the pressure inside the vessel containing the dispersion is preferably controlled to 7 MPa (G) or less, and more preferably 5 MPa (G) or less. That is, the pressure inside the vessel in the retaining step is preferably 1.5 to 7 MPa (G), and more preferably 2.5 to 5 MPa (G).

[Expanding (foaming) step]

An expanding (foaming) step is a step of causing expanding (foaming) of the resin particles impregnated with a blowing agent.

Although the method for expanding the resin particles is not particularly limited, an expanding method is preferred in which, following the retaining step, the resin particles impregnated with the blowing agent are discharged together with water to an atmosphere having a pressure (usually atmospheric pressure) lower than the pressure in the retaining step to cause expansion.

From the viewpoint of obtaining an expanded bead having a low apparent density and a high closed cell ratio, the temperature $Te$ of the dispersion immediately before being expanded (hereinafter also referred to as an expanding temperature) is preferably equal to or higher than a temperature 90°C lower than the melting point ($Tm$) of the resin particle ($Tm$ - 90°C), more preferably equal to or higher than a temperature 80°C lower than $Tm$ ($Tm$ - 80°C), still more preferably equal to or higher than a temperature 70°C lower than $Tm$ ($Tm$ - 70°C), and further preferably equal to or higher than a temperature 65°C lower than $Tm$ ($Tm$ - 65°C), and is preferably lower than a temperature 50°C lower than the melting point ($Tm$) of the resin particle ($Tm$ - 50°C), more preferably equal to or lower than a temperature 55°C lower than $Tm$ ($Tm$ - 55°C), still more preferably equal to or lower than a temperature 57°C lower than $Tm$ ($Tm$ - 57°C), and further preferably equal to or lower than a temperature 59°C lower than $Tm$ ($Tm$ - 59°C). From the above viewpoint, the expanding temperature is preferably ($Tm$ - 90°C) or more and less than ($Tm$ - 50°C), more preferably ($Tm$ - 80°C) to ($Tm$ - 55°C), still more preferably ($Tm$ - 70°C) to ($Tm$ - 57°C), and further preferably ($Tm$ - 65°C) to ($Tm$ - 59°C).

In the expanding step, the pressure immediately before discharging (the expanding pressure) is preferably 0.5 MPa (G) or more, more preferably 1.5 MPa (G) or more, and still more preferably 2.5 MPa (G) or more, and is preferably 10 MPa (G) or less, more preferably 7 MPa (G) or less, and still more preferably 5 MPa (G) or less. That is, the expanding pressure is preferably 0.5 to 10 MPa (G), more preferably 1.5 to 7 MPa (G), and still more preferably 2.5 to 5 MPa (G).

[Polyamide-based resin expanded beads molded article]

The polyamide-based resin expanded beads molded article of the present invention is a polyamide-based resin expanded beads molded article obtained by in-mold molding of the above polyamide-based resin expanded bead.

That is, the polyamide-based resin expanded beads molded article of the present invention is an in-mold molded article of a polyamide-based resin expanded bead obtained by in-mold molding of the polyamide-based resin expanded bead of the present invention.

The polyamide-based resin expanded bead of the present invention has superior in-mold moldability and is capable of providing an excellent polyamide-based resin expanded beads molded article under a broad range of molding pressure conditions, and the resulting expanded beads molded article is an expanded beads molded article having an excellent strength and appearance. The expanded beads molded article obtained by in-mold molding of the expanded bead of the present invention can suppress molding shrinkage after being molded, and thus a thick molded article is suitably obtained. The thickness of the expanded beads molded article is preferably 30 mm or more, and more preferably 40 mm or more.

The in-mold molding method may be a conventional method, and steam heating is preferably used. Due to steam, the polyamide-based resin that constitutes the expanded bead absorbs water and becomes plasticized, thus enabling the in-mold molding of the expanded bead under low molding pressure conditions. By drying the resulting molded article to reduce the amount of water, the intrinsic properties of the polyamide-based resin constituting the molded article can be exhibited, and a molded article having a high heat resistance can be obtained.

The expanded bead of the present invention has superior in-mold moldability. Specifically, during in-mold molding, the expanded bead likely expands (secondary expansion) by being heated by steam or the like and thus has superior secondary expandability, and accordingly a molded article is likely obtained in which there is less space between the expanded beads, and also the expanded beads are favorably fused to each other. In addition, during in-mold molding, the water-cooling time when cooling the mold after heating can be shortened and, as a result, the overall molding time can be shortened.

The water cooling time of the expanded beads molded article is determined as follows. First, a mold is filled with the obtained expanded beads, and in-mold molding is performed by steam heating to obtain an expanded beads molded article. The heating method is carried out by supplying steam for 5 seconds with the drain valves on both sides of the mold opened for preheating (exhaustion step), then supplying steam from the mold on the moving side, followed by supplying steam from the mold on the stationary side, and then heating to the molding and heating steam pressure (molding pressure = molding vapor pressure). After heating is terminated, the pressure is released, and the molded article is cooled with water until the pressure exerted on the molding surface of the mold resulting from the expansion force of the molded article decreases to 0.02 MPa (G). The mold is then opened, and the molded article is removed from the mold. The water cooling time of the expanded beads molded article is taken as the water cooling time (seconds) taken from the start of water cooling until the surface pressure reached 0.02 MPa (G).

The polyamide-based resin expanded beads molded article obtained using the polyamide-based resin expanded bead of the present invention preferably has a density of 10 kg/m$^3$ or more and 250 kg/m$^3$ or less. The polyamide-based resin expanded beads molded article obtained using the polyamide-based resin expanded bead of the present invention has a density of more preferably 20 kg/m$^3$ or more and still more preferably 40 kg/m$^3$ or more, and more preferably 200 kg/m$^3$ or less and still more preferably 100 kg/m$^3$ or less. The density of the polyamide-based resin expanded beads molded article is measured by the following method.

The polyamide-based resin expanded beads molded article is left to stand for 2 days at a relative humidity of 50%, 23°C, and 1 atm, and the mass (W [g]) thereof is measured. Next, the volume V [cm$^3$] of the expanded beads molded article is measured based on the dimensions of the expanded beads molded article. The density of the expanded beads molded article can be determined by dividing the mass W [g] of the expanded beads molded article by the volume V (W/V) and converting the unit into [kg/m$^3$].

EXAMPLES

The present invention is described in detail with reference to the following examples, though the present invention is not limited thereto.

Various physical properties of the raw materials, the expanded beads, and the expanded beads molded articles in each Example were measured by the following methods.

[Measurement method]

[Melting point of polyamide-based resin]

The melting point of the polyamide-based resin was measured by heat-flux differential scanning calorimetry based on JIS K7121-1987. Heating and melting (first temperature rising) was performed from 30°C to a temperature 30°C higher than the temperature at the end of a melting peak at a heating rate of 10°C/min under a nitrogen inflow of 30 mL/min. The temperature was maintained for 10 minutes, then cooling was performed to 30°C at a cooling rate of 10°C/min, heating and melting were performed again to a temperature 30°C higher than the temperature at the end of a melting peak at a heating rate of 10°C/min, and the peak top temperature of a melting peak in the second resulting DSC curve was calculated. A high-sensitivity differential scanning calorimeter "EXSTAR DSC7020" (manufactured by SII Nano Technology Inc.) was used as the measurement apparatus. The test piece used was a polyamide-based resin that had been kept away from high temperature and high humidity conditions so as not to hydrolyze. Specifically, a desiccator was nitrogen-purged, then a vacuum was created such that the amount of water was 1000 ppm by mass or less, and a polyamide-based resin stored for 24 hours in this atmosphere was used to measure the melting point.

[Density of polyamide-based resin]

Determined by the method described in ISO 1183-3.

[Flexural modulus of polyamide-based resin (MPa)]

The flexural modulus of a polyamide-based resin was determined by the measurement in accordance with JIS K7171: 2016. The flexural modulus was measured by preparing a resin test piece composed of a polyamide-based resin having a thickness of 4 mm, a width of 10 mm, and a length of 80 mm and leaving the test piece to stand still at a room temperature of 23°C and a relative humidity of 50% for 72 hours. The measurement was then performed under conditions having a distance between fulcrums of 64 mm, a radius R of the indenter of 15.0 mm, a radius R of the support of 25.0 mm, a test rate of 2 mm/min, a room temperature of 23°C, and a relative humidity of 50%, using a testing machine Autograph AGS-10 kNG (manufactured by Shimadzu Corporation). The average of calculated values (at 5 points) was used as the flexural modulus.

[Closed cell ratio of expanded bead]

In accordance with a procedure C described in ASTM-D2856-70, the value of true volume Vx of an expanded bead (sum of the volume of resin constituting the expanded bead and the total volume of cells in a portion of closed cells in an expanded bead) was measured. In the measurement of the true volume Vx, an air pycnometer "930" manufactured by Beckman-Toshiba Ltd., was used. Subsequently, the closed cell ratio was calculated by the following formula (1), and the arithmetic average of the 5 times measurement results was determined.

$$\text{Closed cell ratio } (\%) = (Vx - W / \rho) \times 100 / (Va - W / \rho) \qquad (1)$$

Vx: True volume of expanded bead measured by the above method ($cm^3$)
Va: Apparent volume of expanded beads ($cm^3$)
W: Mass of sample for use in measurement of expanded beads (g)
$\rho$: Density of resin constituting expanded bead ($g/cm^3$)

(Apparent density of expanded beads)

A measuring cylinder containing water at 23°C was prepared. The mass W1 [g] of expanded beads that had a bulk volume of about 500 $cm^3$ and that had been left to stand for 2 days at a relative humidity of 50%, 23°C, and 1 atm was measured. The expanded beads were submerged in the water using a wire mesh in the measuring cylinder. Considering the volume of the wire mesh, the volume V1 [$cm^3$] of the expanded beads was measured based on the increased water level. The apparent density of the expanded beads was determined by dividing the mass W1 [g] of the expanded beads by the volume V1, i.e., (W1/V1), and converting the unit into [$kg/m^3$].

[Average cell diameter and outermost cell diameter of expanded bead]

First, an expanded bead was split into about two through the center of the expanded bead, and the cross section was photographed with a scanning electron microscope. Next, on the cross-sectional photograph, straight lines were drawn in 8 directions at equal intervals from near the center of the cross-section of the expanded bead, and the total number of all cells intersecting with the lines was counted. The value obtained by dividing the total length of the lines by the total number of cells counted was defined as the cell diameter of the expanded bead. This procedure was performed in the same manner for 10 expanded beads, and the arithmetic mean of the cell diameters of the respective expanded beads measured was defined as the average cell diameter of the expanded beads.
As for the outermost cell diameter of the expanded bead, first, in the cross-sectional photograph used in the measurement of the average cell diameter above, the maximum length of each cell located on the outermost surface side of the expanded bead was calculated by drawing a straight line from the surface of the expanded bead toward the center of the expanded bead. The above measurement was performed in the same manner for each cross-sectional photograph (10 expanded beads), and the arithmetic mean thereof was defined as the outermost cell diameter of the expanded bead.

[Heat of fusion at high temperature peak of expanded bead (ΔH2)]

The temperature and the heat of fusion at the top of each melting peak were determined from the melting peaks obtained in a first DSC curve measured when using an expanded bead as a test piece and raising the temperature from 30°C to a temperature 30°C higher than the temperature at the end of the melting peak at a temperature rising rate of 10°C/min by heat-flux differential scanning calorimetry. The measurement apparatus used was a high-sensitivity differential scanning calorimeter "EXSTAR DSC7020" (manufactured by SII Nano Technology Inc.). The flow rate of nitrogen gas in the measurement environment was 30 mL/min. A description will now be provided below with reference to Fig. 1 (the first DSC curve).
In the first DSC curve shown in Fig. 1, there are two melting peaks. The peak on the low temperature side is the melting peak intrinsic to the polyamide-based resin (an intrinsic peak a), and the peak on the high temperature side is a high temperature peak b.
The heat of fusion at the high temperature peak of the expanded bead corresponds to the area of the high temperature peak b appearing on a higher temperature side than the intrinsic peak a is on the DSC curve shown in Fig. 1, and was determined as follows. First, as shown in Fig. 1, a straight line was drawn connecting a point I at 150°C on the DSC curve with a point II indicating the temperature at the end of fusion on the DSC curve. Next, a point IV was provided at the intersection of a straight line connecting the point I and the point II with a straight line that is perpendicular to the temperature on the horizontal axis of the graph and that passes through a point III on the DSC curve corresponding to the valley between the intrinsic peak a and the high temperature peak b. The area of a portion (a hatched portion) enclosed by the straight line connecting the points IV and II, the straight line connecting the points III and IV, and the DSC curve connecting the points III and II was defined as the heat of fusion (J/g) of the high temperature peak.

[Moldable range of expanded bead]

Expanded beads molded articles were formed by the method described below in [Production of polyamide-based resin expanded beads molded article] while changing the molding pressure (the steam pressure) in increments of 0.02 MPa between 0.10 and 0.24 MPa (G), and the in-mold moldability of the resulting molded articles was evaluated in terms of fusion bonding properties, surface appearance (the degree of gap = void), and recoverability (recoverability from expansion or contraction after in-mold molding). Molded articles that satisfied the criteria shown below were deemed acceptable, and the steam pressures that resulted in molded articles acceptable in all respects were regarded as moldable steam pressures.

The difference between the upper limit and lower limit of the moldable steam pressures (the upper limit of molding - the lower limit of molding) was calculated and regarded as a moldable range. Expanded beads with a broad range from the lower limit to the upper limit of moldable steam pressures, or that is to say, expanded beads having a large difference between the upper limit and the lower limit of moldable steam pressures, have a broad moldable range and are thus suitable.

(Fusion bonding property)

An expanded beads molded article was broken by being bent, and the number of expanded beads present on the fracture surface (C1) and the number of broken expanded beads (C2) were determined. The ratio of the number of broken expanded beads to the number of expanded beads (C2/C1×100) was calculated as a material destruction rate. The above measurement was performed five times using different test pieces, the material destruction rate in each case was determined. An arithmetic mean of the material destruction rates being 80% or more was deemed acceptable, and less than 80% was deemed unacceptable.

(Surface appearance)

A 100 mm × 100 mm square was drawn in the center of the plate surface of an expanded beads molded article, a line was drawn diagonally from one corner of the square, and the number of voids (gaps) having a size of 1 mm × 1 mm or greater on that line was counted. Molded articles having fewer than 5 voids and no irregularities on the surface were deemed acceptable, and others were deemed unacceptable.

(Recoverability)

As for an expanded beads molded article that had a flat plate shape, a length of 250 mm, a width of 200 mm and a thickness of 50 mm and that was obtained by in-mold molding, the thicknesses of portions near the four corners (10 mm inward from the corners toward the center of the plate) and the thickness at the center of the molded article (the intersection of a line bisecting the molded article in the longitudinal direction and a line bisecting the molded body in the transverse direction) were measured. Then, the ratio (%) of the thickness at the center to the largest thickness among the thicknesses of portions near the four corners was calculated. Molded articles having a ratio of 95% or more were deemed acceptable, and those having a ratio of less than 95% were deemed unacceptable.

[Density of molded article]

An expanded beads molded article was left to stand for 2 days at a relative humidity of 50%, 23°C, and 1 atm. Then, the mass thereof was measured and regarded as W [g]. Next, the volume V [cm$^3$] of the expanded beads molded article was measured based on the dimensions of the expanded beads molded article. The mass W [g] of the expanded beads molded article was divided by the volume V (W/V), and the unit was converted to [kg/m$^3$] to thereby determine the density of the expanded beads molded article.

[Surface smoothness]

(Evaluation of surface smoothness of expanded beads molded article)

The surface smoothness of an expanded beads molded article was evaluated according to the following criteria. The more filled the gap between expanded beads in the surface of the molded article is, the better the surface smoothness is. Specifically, a 100 mm × 100 mm square was drawn in the center of the plate surface of the expanded beads molded article, and the number of depressions (gaps between expanded beads) having a depth of 1 mm or more in that portion was measured.

A: 2 or less

B: 3 to 9

C: 10 or more

Examples 1 to 12

[Production of polyamide-based resin particle]

A polyamide-based resin "6434B" (manufactured by Ube Industries, Ltd.), masterbatches (MB1 to 4) containing carbon nanotubes as shown in Tables 2 and 3, talc "Talcum Powder PK-S" (manufactured by Hayashi Kasei Co., Ltd.) as a cell controlling agent, and "Stabaxol P" (manufactured by Rhein Chemie Corporation) as an end-capping agent were supplied to an extruder, and the mixture was melted and kneaded. At this time, the masterbatches (MB1 to 4) containing carbon nanotubes were fed such that the amounts of carbon nanotubes in the respective resin particles were the amounts (% by mass) shown in Tables 2 and 3, talc was fed such that the amount in the resin beads was 0.3% by mass, and "Stabaxol P" was fed so as to be 1 part by mass based on 100 parts by mass of the polyamide-based resin. The molten kneaded product thus obtained was extruded from a small nozzle attached to the tip of the extruder as a single layer strand having a circular cross section. The extruded strand was cooled with water, then cut into resin particles each having a mass of about 2.0 mg with a pelletizer, and dried. Thus, polyamide-based resin particles were obtained.
Meanwhile, the polyamide resin "6434B" has a product name: UBE Nylon 6434B, and is a polyamide 6/66/12 copolymer (nylon 6/66/12) having a melting point (Tm0) of 186°C, a density of 1.12 g/cm$^3$, and a flexural modulus of 1070 MPa.
Table 1 shows details of masterbatches (MB1 to 4) containing carbon nanotubes shown in Tables 2 and 3.

Table 1

| Masterbatch | Type (number) | | MB1 | MB2 | MB3 | MB4 |
|---|---|---|---|---|---|---|
| | Carbon nanotube average diameter | nm | 9.5 | 13 | 15 | 9.5 |
| | Carbon nanotube average length | μm | 1.5 | 8 | 0.6 | 1.5 |
| | Carbon nanotube aspect ratio | - | 158 | 615 | 40 | 158 |
| | Carbon nanotube content | % by mass | 15 | 15 | 15 | 10 |
| | Masterbatch resin type | - | 6434B | FX4ET | FX4ET | FX4ET |

The carbon nanotubes shown in Table 1 are all commercially available.
In the type of masterbatch resin in Table 1, "6434B" refers to the above polyamide resin "6434B," and "FX4ET" refers to "FX4ET" manufactured by Japan Polypropylene Corporation, which is a polypropylene-based resin (a propylene/1-butene/ethylene copolymer) having a melting point of 131°C, a density of 900 g/cm$^3$, and a flexural modulus of 650 MPa.

[Production of polyamide-based resin expanded bead]

A 5-liter autoclave equipped with a stirrer was charged with 500 g of the resulting polyamide-based resin particles and 3.5 liters of water as a dispersion medium. Moreover, 0.3 parts by mass of kaolin as a dispersant and 0.004 parts by mass of sodium alkylbenzenesulfonate as a surfactant were added to the autoclave based on 100 parts by mass of the polyamide-based resin particles. While stirring the contents of the autoclave and increasing the temperature from room temperature (23°C) to the impregnation temperature (the same temperature as the expanding temperature described below), carbon dioxide as a blowing agent was injected into the autoclave until the pressure inside the autoclave reached the impregnation pressure (4.0 MPa (G)). At this time, the duration of increasing the temperature from room temperature (23°C) to the impregnation temperature was 40 minutes. After the impregnation temperature was reached, the autoclave was retained at this temperature for 15 minutes, with the pressure inside the autoclave being 4.0 MPa (G).
Thereafter, the polyamide-based resin particles impregnated with the blowing agent were discharged together with the dispersion medium under atmospheric pressure (0.1 MPa). The expanding temperature (the temperature of the dispersion immediately before expansion) was the temperature shown in Table 2 or Table 3. The resulting polyamide-based resin expanded beads were cured in an oven at 60°C for 24 hours and then gradually cooled. Thus, polyamide-based resin expanded beads were obtained.
The above evaluation was performed on the resulting polyamide-based expanded resin beads. The results are shown in Tables 2 and 3.

[Production of polyamide-based resin expanded beads molded article]

Next, a polyamide-based resin expanded beads molded article was produced using the polyamide-based resin expanded beads.

The molding space of a mold capable of forming a flat plate having a length of 200 mm × a width of 65 mm × a thickness of 40 mm was filled with the resulting polyamide-based resin expanded beads, and in-mold molding was performed by steam heating to obtain a polyamide-based resin expanded beads molded article in a plate form.

The heating method was carried out by supplying steam for 5 seconds with the drain valves on both sides of the mold being open for preheating (gas discharge step), then supplying steam from the mold on the mobile side with the drain valve on the stationary side being open, followed by supplying steam from the mold on the stationary side with the drain valve on the mobile side being open, closing the discharge valve, and then heating to a forming/heating steam pressure of 0.12 MPa (G).

After heating is terminated, the pressure was released, and the molded article was cooled with water until the surface pressure, which is the pressing force exerted on the molding surface of the mold resulting from the expanding force of the molded article, decreased to 0.02 MPa (G). The mold was then opened, and the molded article was removed from the mold. Thereafter, the molded article was left to stand still in an oven at 80°C, and removed after 24 hours. Thus, a polyamide-based resin expanded beads molded article was obtained.

The above measurement and evaluation were performed on the resulting polyamide-based resin expanded beads molded article. The results are shown in Tables 2 and 3.

Comparative Examples 1 to 3

Polyamide-based resin particles, polyamide-based resin expanded beads, and polyamide-based resin expanded beads molded articles were obtained in the same manner as Example 1 except that unlike in the [Production of polyamide-based resin particles] of Example 1, the carbon black-containing masterbatches shown in Table 4 were used in the amounts shown in Table 4 in place of the carbon nanotube-containing masterbatches, and the expanding temperature was the temperature shown in Table 4. The above measurement and evaluation were performed on the resulting polyamide-based resin expanded beads and polyamide-based resin expanded beads molded articles. The results are shown in Table 4.

Comparative Example 4

Polyamide-based resin particles, polyamide-based resin expanded beads, and a polyamide-based resin expanded beads molded article were obtained in the same manner as Example 1 except that unlike in the [Production of polyamide-based resin particles] of Example 1, no carbon nanotube-containing masterbatch was used, and the expanding temperature was the temperature shown in Table 4. The above measurement and evaluation were performed on the resulting polyamide-based resin expanded bead and polyamide-based resin expanded beads molded article. The results are shown in Table 4.

Comparative Example 5

Polyamide-based resin particles and polyamide-based resin expanded beads were obtained in the same manner as Example 1 except that unlike in the [Production of polyamide-based resin particles] of Example 1, the heat of fusion at the high temperature peak of the expanded beads was 0 J/g, and the expanding temperature was the temperature shown in Table 4. The resulting polyamide-based resin expanded beads had a closed cell ratio of 58%, an apparent density of 178 kg/m$^3$, an average cell diameter of 150 $\mu$m, and an outermost cell diameter of 180 $\mu$m. These expanded beads had poor in-mold moldability, and it was difficult to form the expanded beads into the shape of a molded article even when molding was performed.

Table 2

| | | | Example | | | | | |
|---|---|---|---|---|---|---|---|---|
| | | | 1 | 2 | 3 | 4 | 5 | 6 |
| Raw material | Polyamide-based resin | | 6434B | 6434B | 6434B | 6434B | 6434B | 6434B |
| | Masterbatch type (number) | | MB1 | MB1 | MB1 | MB2 | MB2 | MB2 |
| | Carbon nanotube content | % by mass | 0.5 | 1.0 | 2.5 | 0.5 | 0.5 | 1.0 |
| | Carbon black content | % by mass | - | - | - | - | - | - |
| | Cell controlling agent | ppm | 3000 | 3000 | 3000 | 3000 | 3000 | 3000 |
| Production condition | Expanding temperature | °C | 131 | 130 | 130 | 130 | 130 | 130 |
| | Expanding pressure | MPa | 4.0 | 4.0 | 4.0 | 4.0 | 4.0 | 4.0 |
| Expanded bead | Closed cell ratio | % | 91 | 86 | 90 | 94 | 95 | 97 |
| | Apparent density | kg/m³ | 118 | 122 | 124 | 122 | 115 | 148 |
| | Average cell diameter | μm | 114 | 81 | 48 | 68 | 66 | 58 |
| | Outermost cell diameter | μm | 128 | 92 | 35 | 49 | 83 | 49 |
| | ΔH2 | J/g | 5.9 | 4.7 | 2 | 5.8 | 6.8 | 8.2 |
| Molding | Moldable range (Upper limit - lower limit of molding pressure) | MPa | 0.06 | 0.08 | 0.06 | 0.06 | 0.1 | 0.06 |
| Molded article | Density of molded article | kg/m³ | 75 | 84 | 85 | 75 | 75 | 97 |
| | Surface smoothness | | B | A | B | B | B | A |

Table 3

| | | | Example | | | | | |
|---|---|---|---|---|---|---|---|---|
| | | | 7 | 8 | 9 | 10 | 11 | 12 |
| Raw material | Polyamide-based resin | | 6434B | 6434B | 6434B | 6434B | 6434B | 6434B |
| | Masterbatch type (number) | | MB3 | MB3 | MB4 | MB4 | MB1 | MB1 |
| | Carbon nanotube content | % by mass | 0.5 | 1 | 0.5 | 1 | 2.5 | 1.0 |
| | Carbon black content | % by mass | - | - | - | - | - | 1 |
| | Cell controlling agent | ppm | 3000 | 3000 | 3000 | 3000 | 3000 | 3000 |
| Production condition | Expanding temperature | °C | 130 | 130 | 131 | 131 | 131 | 131 |
| | Expanding pressure | MPa | 4.0 | 4.0 | 4.0 | 4.0 | 4.0 | 4.0 |
| Expanded bead | Closed cell ratio | % | 94 | 93 | 94 | 90 | 90 | 95 |
| | Apparent density | kg/m³ | 120 | 110 | 139 | 172 | 124 | 129 |
| | Average cell diameter | μm | 52 | 67 | 94 | 79 | 58 | 81 |
| | Outermost cell diameter | μm | 69 | 84 | 96 | 69 | 65 | 64 |
| | ΔH2 | J/g | 7.2 | 5.9 | 6.1 | 3.6 | 0 | 5.9 |
| Molding | Moldable range (Upper limit - lower limit of molding pressure) | MPa | 0.06 | 0.06 | 0.06 | 0.06 | 0.06 | 0.06 |

(continued)

| | | | Example | | | | | |
|---|---|---|---|---|---|---|---|---|
| | | | 7 | 8 | 9 | 10 | 11 | 12 |
| Molded article | Density of molded article | kg/m$^3$ | 77 | 70 | 86 | 121 | 85 | 81 |
| | Surface smoothness | | B | B | A | B | B | A |

Table 4

| | | | Comparative Example | | | | |
|---|---|---|---|---|---|---|---|
| | | | 1 | 2 | 3 | 4 | 5 |
| Raw material | Polyamide-based resin | | 6434B | 6434B | 6434B | 6434B | 6434B |
| | Masterbatch type (number) | | - | - | - | - | MB4 |
| | Carbon nanotube content | % by mass | - | - | - | - | 1.0 |
| | Carbon black content | % by mass | 1.0 | 2.5 | 5.0 | - | - |
| | Cell controlling agent | ppm | 3000 | 3000 | 3000 | 3000 | 3000 |
| Production condition | Expanding temperature | °C | 131 | 131 | 131 | 131 | 134 |
| | Expanding pressure | MPa | 4.0 | 4.0 | 4.0 | 4.0 | 4.0 |
| Expanded bead | Closed cell ratio | % | 90 | 96 | 95 | 90 | 58 |
| | Apparent density | kg/m$^3$ | 109 | 109 | 120 | 110 | 178 |
| | Average cell diameter | μm | 73 | 73 | 77 | - | 150 |
| | Outermost cell diameter | μm | 70 | 57 | 19 | 90 | 180 |
| | ΔH2 | J/g | 9 | 8.6 | 7.6 | 9.2 | 0 |
| Molding | Moldable range (Upper limit - lower limit of molding pressure) | MPa | 0.02 | 0.02 | 0.02 | 0.04 | - |
| Molded article | Density of molded article | kg/m$^3$ | 65 | 65 | 79 | 78 | - |
| | Surface smoothness | | C | C | C | B | - |

As can be understood from the results shown in Tables 2 and 3, the polyamide-based resin expanded beads obtained in the Examples have a broad molding range and can be molded under a broad range of molding pressure conditions. Accordingly, it can be understood that the polyamide-based resin expanded bead of the present invention has superior in-mold moldability and is capable of providing an excellent polyamide-based resin expanded beads molded article under a broad range of molding pressure conditions.

Based on the description of the present specification above, the present invention may adopt the following configurations [1] to [6]:

[1] A polyamide-based resin expanded bead comprising a polyamide-based resin as a base resin, wherein the expanded bead comprises a carbon nanotube, and the expanded bead has a closed cell ratio of 70% or more.

[2] The polyamide-based resin expanded bead according to [1], wherein the carbon nanotube has an average diameter of 5 to 25 nm, and the carbon nanotube has an average length of 0.2 to 50 μm.

[3] The polyamide-based resin expanded bead according to [1] or [2], wherein the carbon nanotube has an aspect ratio of 20 to 1000.

[4] The polyamide-based resin expanded bead according to any one of [1] to [3], wherein a content of the carbon nanotube is 0.1 to 3 parts by mass based on 100 parts by mass of the base resin.

[5] The polyamide-based resin expanded bead according to any one of [1] to [4], wherein the expanded bead has an apparent density of 50 to 500 kg/m$^3$.

[6] A polyamide-based resin expanded beads molded article, obtained by in-mold molding of the polyamide-based resin expanded bead according to any one of [1] to [5].

**Claims**

1. A polyamide-based resin expanded bead comprising a polyamide-based resin as a base resin, wherein

   the expanded bead comprises a carbon nanotube, and
   the expanded bead has a closed cell ratio of 70% or more.

2. The polyamide-based resin expanded bead according to claim 1, wherein the carbon nanotube has an average diameter of 5 to 25 nm, and the carbon nanotube has an average length of 0.2 to 50 $\mu$m.

3. The polyamide-based resin expanded bead according to claim 1 or 2, wherein the carbon nanotube has an aspect ratio of 20 to 1000.

4. The polyamide-based resin expanded bead according to any one of claims 1 to 3, wherein a content of the carbon nanotube is 0.1 to 3 parts by mass based on 100 parts by mass of the base resin.

5. The polyamide-based resin expanded bead according to any one of claims 1 to 4, wherein the expanded bead has an apparent density of 50 to 500 kg/m$^3$.

6. A polyamide-based resin expanded beads molded article, obtained by in-mold molding of the polyamide-based resin expanded bead according to any one of claims 1 to 5.

[Fig. 1]

## INTERNATIONAL SEARCH REPORT

| International application No. |
| --- |
| **PCT/JP2023/027244** |

| A. | CLASSIFICATION OF SUBJECT MATTER |
| --- | --- |

***C08J 9/16***(2006.01)i
FI: C08J9/16 CFG

According to International Patent Classification (IPC) or to both national classification and IPC

| B. | FIELDS SEARCHED |
| --- | --- |

Minimum documentation searched (classification system followed by classification symbols)

C08J9/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2003-238727 A (IDEMITSU PETROCHEM CO LTD) 27 August 2003 (2003-08-27) claims, examples, entire text | 1-6 |
| A | KR 10-2022-0081721 A (HANWHA SOLUTIONS CORPORATION) 16 June 2022 (2022-06-16) claims, examples, entire text | 1-6 |
| A | WO 2008/091308 A2 (DOW GLOBAL TECHNOLOGIES INC.) 31 July 2008 (2008-07-31) claims, examples, entire text | 1-6 |
| A | JP 2019-108540 A (KOREA KUMHO PETROCHEMICAL CO., LTD.) 04 July 2019 (2019-07-04) claims, examples, entire text | 1-6 |
| A | JP 2021-130739 A (JSP CORP) 09 September 2021 (2021-09-09) claims, examples, entire text | 1-6 |
| A | WO 2020/050301 A1 (JSP CORP) 12 March 2020 (2020-03-12) claims, examples, entire text | 1-6 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/027244**

| Patent document cited in search report | | | Publication date (day/month/year) | Patent family member(s) | | | Publication date (day/month/year) |
|---|---|---|---|---|---|---|---|
| JP | 2003-238727 | A | 27 August 2003 | (Family: none) | | | |
| KR | 10-2022-0081721 | A | 16 June 2022 | WO | 2022/124580 | A1 | |
| WO | 2008/091308 | A2 | 31 July 2008 | US | 2008/0300331 | A1 | |
| | | | | EP | 2106417 | A2 | |
| JP | 2019-108540 | A | 04 July 2019 | EP | 3498765 | A1 | |
| | | | | claims, examples, entire text | | | |
| | | | | KR | 10-2019-0071184 | A | |
| | | | | CN | 109971026 | A | |
| | | | | TW | 201927878 | A | |
| JP | 2021-130739 | A | 09 September 2021 | US | 2021/0253819 | A1 | |
| | | | | claims, examples, entire text | | | |
| | | | | KR | 10-2021-0105306 | A | |
| | | | | TW | 202132441 | A | |
| WO | 2020/050301 | A1 | 12 March 2020 | JP | 2020-59864 | A | |
| | | | | US | 2021/0189089 | A1 | |
| | | | | claims, examples, entire text | | | |
| | | | | JP | 6653049 | B1 | |
| | | | | WO | 2020/049802 | A1 | |
| | | | | EP | 3848408 | A1 | |
| | | | | EP | 3974468 | A1 | |
| | | | | EP | 3988605 | A1 | |
| | | | | CN | 112654669 | A | |
| | | | | KR | 10-2021-0053900 | A | |
| | | | | TW | 202016188 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020050301 A